(19) Europäisches Patentamt
European Patent Office
Office européen des brevets

(11) **EP 3 985 862 A1**

(12) **EUROPEAN PATENT APPLICATION**
published in accordance with Art. 153(4) EPC

(43) Date of publication:
**20.04.2022 Bulletin 2022/16**

(21) Application number: **20821861.0**

(22) Date of filing: **01.06.2020**

(51) International Patent Classification (IPC):
**H02P 25/024** (2016.01)     **B60L 9/18** (2006.01)
**B60L 15/20** (2006.01)     **H02P 5/46** (2006.01)

(52) Cooperative Patent Classification (CPC):
**B60L 9/18; B60L 15/20; H02P 5/46; H02P 25/024;**
**Y02T 10/64; Y02T 10/72**

(86) International application number:
**PCT/JP2020/021672**

(87) International publication number:
**WO 2020/250742 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2019 JP 2019111315**

(71) Applicant: **Hitachi, Ltd.**
**Tokyo 100-8280 (JP)**

(72) Inventors:
• **KUNIHIRO, Naoki**
  **Tokyo 100-8280 (JP)**
• **SHINOMIYA, Takeshi**
  **Tokyo 100-8280 (JP)**
• **OGAWA, Kazutoshi**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **DEVICE AND METHOD FOR DRIVING PERMANENT MAGNET SYNCHRONOUS MOTOR, AND RAILWAY VEHICLE**

(57)     An inverter unit 1 of a permanent magnet synchronous motor 4 has: a voltage generation device 3 that outputs a voltage to the permanent magnet synchronous motor 4; and a control unit 2 that controls the output voltage of the voltage generation device on the basis of a torque command value. The control unit 2 performs coasting control for controlling the voltage generation device 3 to output a voltage for suppressing an induced voltage of the permanent magnet synchronous motor 4 to the permanent magnet synchronous motor 4 when inflow of a current from the permanent magnet synchronous motor 4 to the voltage generation device side is detected while control of an output stop of a driving voltage for driving the permanent magnet synchronous motor 4 is performed. During the coasting control, the control unit 2 sets the torque command value to a coasting control time torque command value which is a positive value corresponding to the increase of a rotational frequency of the permanent magnet synchronous motor 4.

FIG. 1

**Description**

Technical Field

The present invention relates to a device and method for driving a permanent magnet synchronous motor, and a railway vehicle.

Background Art

In recent years, application of a permanent magnet synchronous motor has been advancing for the purpose of downsizing and high efficiency of a driving system for a railway vehicle.

In a railway vehicle equipped with a permanent magnet synchronous motor, since the permanent magnet synchronous motor incorporates a permanent magnet in a rotor, an induced voltage is generated in a stator winding when a magnet magnetic flux is interlinked with the stator winding of the permanent magnet synchronous motor during coasting. The induced voltage increases in proportion to the speed, and in the case where the induced voltage becomes higher than a filter capacitor voltage that is the DC voltage of an inverter for driving the permanent magnet synchronous motor, there is a problem that a charging current flows from the permanent magnet synchronous motor side to the inverter side, an overvoltage of the filter capacitor voltage is generated, and brake torque is generated in the permanent magnet synchronous motor by the flowing of the charging current.

Therefore, in the case of shifting to a coasting state in which the torque output of the permanent magnet synchronous motor is stopped in the high-speed region in which the induced voltage becomes higher than the filter capacitor voltage, "coasting control" is generally used in which the voltage output of the inverter is continued and the torque is controlled to 0 while performing weak magnetic flux control so that the magnitude of the induced voltage becomes equal to or smaller than the maximum output voltage of the inverter.

Regarding the coasting control, the following techniques have been proposed to prevent the generation of the brake torque due to the charging current. In order to prevent the generation of the brake torque due to the charging current during coasting, for example, Patent Literature 1 discloses a technique for adjusting the DC voltage of an inverter unit so that the voltage on the DC side of the inverter unit becomes equal to or higher than a second reference value set based on an induced voltage when the induced voltage of a synchronous motor becomes equal to or higher than a first reference value.

In addition, Patent Literature 2 proposes a technique including correction means for adding a correction value for giving positive torque to a torque command value when exceeding a rotational speed detection value Nm0 in order to prevent an unintended regenerative brake from being applied due to flowing of a regenerative current when the torque command value is 0.

Citation List

Patent Literature

[Patent Literature 1] Japanese Unexamined Patent Application Publication No. 2010-154661
[Patent Literature 2] Japanese Unexamined Patent Application Publication No. Hei 10(1998)-164701

Summary of Invention

Technical Problem

The inventors of the application have made a careful study for the purpose of further reducing the brake torque during the coasting control of the permanent magnet synchronous motor, and as a result, the following findings have been obtained.

Patent Literature 1 discloses a technique for preventing the generation of a charging current and brake torque by boosting the DC voltage of the inverter to be equal to or higher than the induced voltage. However, there is a problem that Patent Literature 1 cannot be applied to an inverter unit in which the magnitude of the DC voltage cannot be controlled.

Further, even if the DC voltage of the inverter is made higher than the induced voltage of the synchronous motor to make the current 0, the magnetic flux of a permanent magnet provided in a rotor changes in a stator core by alternating current to generate an iron loss during coasting. In addition to the above, a mechanical loss is also generated by the ventilation resistance of a fan connected to a rotor shaft and friction generated in a bearing for supporting the rotor shaft.

In practice, even when the current of the motor is 0, there is a problem that the brake torque is generated in the rotor shaft of the motor due to the losses of the motor. Further, since the iron loss and the mechanical loss increase as the speed increases, the value of the brake torque due to the motor loss also increases during coasting in the high-speed region.

That is, in Patent Literature 1, there is a problem that the generation of the brake torque generated by the flow of the charging current from the synchronous motor side to the inverter side can be prevented, but the brake torque caused by the iron loss and the mechanical loss that increase in the high-speed region cannot be prevented.

In addition, Patent Literature 2 discloses a technique in which a driving control unit is operated by setting, the torque command- value to 0, fluctuation of output torque due to a control error is measured, a value at which the regenerative current becomes 0 when the torque command value is set to 0 is set as a correction value, and generation of the regenerative current is prevented.

However, since the purpose of Patent Literature 2 is to control the current to 0 as similar to Patent Literature 1, there is a problem that the generation of the brake torque due to the iron loss and the mechanical loss that increase in the high-speed region cannot be prevented.

In addition, although Patent Literature 2 discloses means for correcting a positive torque command value for the purpose of generating the brake torque by a charging current, there is no description of changing with respect to a frequency, and the generation of the brake torque due to the iron loss or the mechanical loss cannot be prevented.

For the reasons described above, there is room for further improvement in preventing the generation of the brake torque during the coasting control of a drive system using a permanent magnet synchronous motor.

The present invention has been made in consideration of the above-described points, and an object thereof is to reduce brake torque generated by an iron loss or a mechanical loss during coasting control of a drive system using a permanent magnet synchronous motor.

Solution to Problem

In order to solve the problems, as one means for achieving one object in the present invention, a device for driving a permanent magnet synchronous motor includes: a voltage generation device that outputs a voltage to a permanent magnet synchronous motor; and a control unit that controls the output voltage of the voltage generation device on the basis of a torque command value. In the case where the control unit controls to stop an output of a driving voltage for driving the permanent magnet synchronous motor, when detecting inflow of a current from the permanent magnet synchronous motor to the voltage generation device side, the control unit performs coasting control for controlling the voltage generation device so as to output a voltage for suppressing the induced voltage of the permanent magnet synchronous motor to the permanent magnet synchronous motor, and during the coasting control, the torque command value is set to a coasting control time torque command value that is a positive value in accordance with a rise in the rotational frequency of the permanent magnet synchronous motor.

Advantageous Effects of Invention

According to the present invention, for example, brake torque generated by an iron loss or a mechanical loss during coasting control of a drive system using a permanent magnet synchronous motor can be reduced.

Brief Description of Drawings

FIG. 1 is a diagram for showing an example of a functional block of a device for driving a permanent magnet synchronous motor according to a first embodiment.
FIG. 2 is a diagram for showing a comparison of the running resistance of a railway vehicle in the presence or absence of an iron loss and a mechanical loss of the permanent magnet synchronous motor.
FIG. 3 is a diagram for showing an example of a torque command pattern during coasting control as a modified example of the first embodiment.
FIG. 4 is a diagram for showing an example of a functional block of a device for driving a permanent magnet synchronous motor according to a second embodiment.
FIG. 5 is a diagram for showing an example of a torque command pattern during coasting control as a modified example of the second embodiment.
FIG. 6 is a diagram for showing an example of a functional block of a device for driving a permanent magnet synchronous motor according to a third embodiment.

FIG. 7 is a diagram for showing an example of a functional block of a device for driving a permanent magnet synchronous motor according to a fourth embodiment.

FIG. 8 is a diagram for showing a schematic configuration of a truck for a railway vehicle.

FIG. 9 is a diagram for showing cogging torque generated in the permanent magnet synchronous motor.

FIG. 10 is a diagram for explaining a meshing portion of a gear of a speed reduction gear.

FIG. 11 is a diagram for explaining a meshing portion of a gear of a joint.

FIGs. 12 are diagrams each showing an example of a railway vehicle according to a fifth embodiment.

Description of Embodiments

Hereinafter, as embodiments for carrying out the present invention, each of first to fifth embodiments will be described in detail in accordance with the drawings. In each embodiment, configuration requirements having the same reference numerals are shown as the same configuration requirements or configuration requirements having similar functions. In addition, description of the same or similar configuration requirements as in the previous embodiments will be omitted in some cases in the embodiments described later. It should be noted that the configuration to be described below is presented only as an example, and embodiments of the present invention are not limited to the following embodiments. In addition, some or all of the embodiments can be combined to each other within the scope of the technical idea and the consistency of the present invention.

First Embodiment

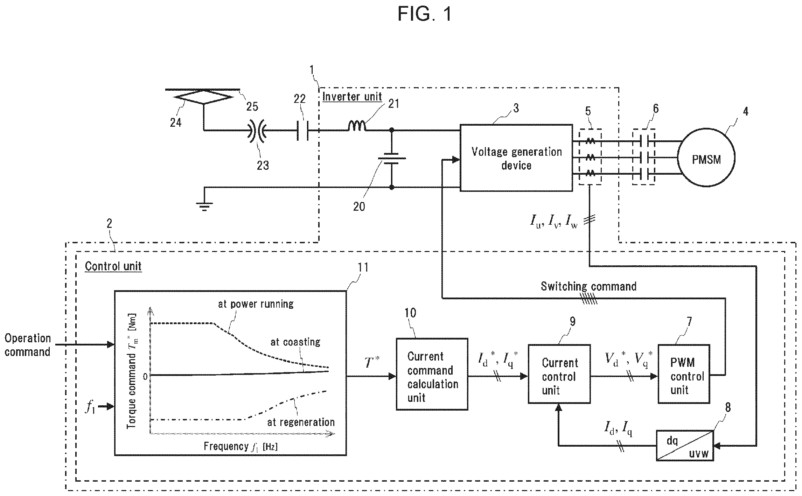

FIG. 1 is a diagram for showing an example of a functional block of a device for driving a permanent magnet synchronous motor according to a first embodiment. FIG. 1 shows, as a functional block, a configuration in which a torque command value during coasting control is changed in order to reduce brake torque due to iron loss and mechanical loss during the coasting control. FIG. 1 shows only the minimum functional blocks required in the first embodiment, a power converter configured using a driving transistor such as an IGBT (Insulated Gate Bipolar Transistor) and a power device such as a diode and a control configuration for the power converter are shown in a block diagram of a voltage generation device 3, and the detailed illustration thereof is omitted.

As shown in FIG. 1, an inverter unit 1 exchanges electric power with an overhead contact line 25 via a pantograph 24, and a high speed circuit breaker 23 and a line breaker 22 can cut off the current on the overhead contact line side and the inverter side. In addition, the inverter unit 1 is provided with an LC filter circuit for current smoothing including a filter reactor 21 and a filter capacitor 20 between the voltage generation device 3 and the overhead contact line 25.

In the inverter unit 1, the voltage generation device 3 applies a three-phase AC voltage to a permanent magnet synchronous motor 4 via a driving circuit and a main circuit (not shown but included in the voltage generation device 3) on the basis of a switching command from a control unit 2.

The permanent magnet synchronous motor 4 generates rotational torque by using magnet torque generated by attraction and repulsion between a magnetic pole by a rotational magnetic field generated on the stator side by application of the three-phase AC voltage from the voltage generation device 3 and the magnetic pole of a permanent magnet of a rotor of the permanent magnet synchronous motor 4, and reluctance torque generated by attraction force between a magnetic pole by the rotational magnetic field of a stator and the magnetic salient pole of the rotor.

An AC contactor 6 is provided between the voltage generation device 3 and the permanent magnet synchronous motor 4, receives a control signal (not shown) output from the control unit 2 by a control circuit (not shown) provided in the AC contactor 6, and performs an opening/closing operation in accordance with the control signal. When an abnormality occurs or the inverter unit 1 stops, a current flowing between the inverter unit 1 and the permanent magnet synchronous motor 4 is cut off.

A current detector 5 is configured using a hole CT (Current Transformer) and the like, and detects each waveform of three-phase currents $I_u$, $I_v$, and Iw of a U-phase, a V-phase, and a W-phase flowing in the permanent magnet synchronous motor 4. However, it is not always necessary to detect all the currents of the three phases by the current detector 5, and any two phases among the three phases may be detected, and the remaining one phase may be obtained by computation on the assumption that the three-phase currents are in an equilibrium state.

A control program for driving and controlling the permanent magnet synchronous motor 4 connected as a load is mounted in the control unit 2. The control unit 2 outputs a torque command value T* in a torque command computing unit 11 in accordance with an operation command from a host device. In the torque command computing unit 11 of FIG. 1, only three conditions of power running, regeneration, and coasting are shown, but actually, the magnitude of the torque command value T* is appropriately changed in accordance with information such as the boarding rate.

A current command computing unit 10 outputs current command values $I_d*$ and $I_q*$ of the dq-axis for obtaining predetermined torque with respect to the torque command value T*. The d-axis is defined as the phase in the N-pole direction of the magnetic pole of the rotor magnet, and the q-axis is defined as the direction orthogonal to the d-axis at the electric angle. Although not shown in the drawing, the current command computing unit 10 computes appropriate current commands $I_d^*$ and $I_q^*$ so as not to exceed the maximum voltage that the voltage generation device 3 can output on the basis of the magnitude of the voltage of the filter capacitor 20 and the rotational frequency of the permanent magnet synchronous motor 4, and outputs them to the current control unit 9.

A coordinate converter 8 converts the three-phase currents $I_u$, $I_v$, and $I_w$ of the permanent magnet synchronous motor 4 detected by the current detector 5 into the dq coordinates of the rotating coordinate system by using the d-axis phase θ (not shown) recognized by the control unit 2, and outputs them to the current control unit 9 as dq-axis current detection values ($I_d$ and $I_q$).

The current control unit 9 generates and outputs voltage command values $V_d^*$ and $V_q^*$ by PI (Proportional-Integral) control or the like so that a current deviation between the dq-axis current detection value output by the coordinate converter 8 and a dq-axis current command value output by the current command computing unit 10 becomes 0.

A PWM control unit 7 outputs a switching command of a PWM voltage (Pulse Width Modulation) on the basis of the voltage. command values $V_d^*$ and $V_q^*$ of the dq-axis output by the current control unit 9. Although not shown in the drawing, the PWM control unit 7 internally computes the phase angle of the voltage waveform by using the reference phase θ of the control unit 2.

Hereinafter, the torque of the permanent magnet synchronous motor 4 during coasting that is the point of the present invention will be described. In the permanent magnet synchronous motor 4, torque $\tau_{rotor}$ generated on the rotor surface by the dq-axis current is expressed by the following equation.

[Equation 1]

$$\tau_{rotor} = 3 \cdot P_{\mathrm{m}}\{K_{\mathrm{e}} \cdot I_{\mathrm{q}} + (L_{\mathrm{d}} - L_{\mathrm{q}}) \cdot I_{\mathrm{d}} \cdot I_{\mathrm{q}}\} \cdot \cdot \cdot (1)$$

Here, $P_m$ is the number of pole pairs, $K_e$ is a magnet magnetic flux (power generation constant), $I_d$ is a d-axis current, $I_q$ is a q-axis current, $L_d$ is a d-axis inductance, and $L_q$ is a q-axis inductance.

The first term of Equation (1) is the above-described magnet torque (torque generated by attraction and repulsion between the magnetic pole by the rotational magnetic field and the magnetic pole of the permanent magnet of the rotor), and the second term of Equation (1) is the above-described reluctance torque (torque generated by the attraction force between the magnetic pole by the rotational magnetic field of the stator and the magnetic salient pole of the rotor).

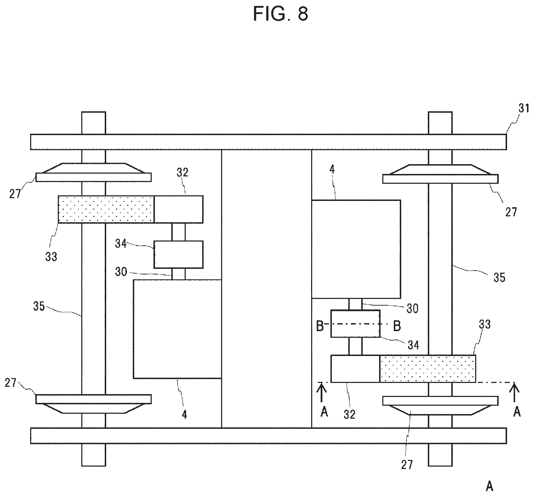

In general, it is often considered that the torque generated in the permanent magnet synchronous motor 4 becomes 0 by controlling the torque $\tau_{rotor}$ to 0, that is, by controlling the q-axis current $I_q$ to 0 according to Equation (1). However, the inventors have considered that it is not sufficient only by controlling the q-axis current $I_q$ to 0 as described above in order to make the torque to 0 more accurately. Equation (1) shows only the torque generated on the rotor surface of the permanent magnet synchronous motor 4, and actually, brake torque is generated in torque $\tau_{shaft}$ generated in a rotor shaft 30 (shown in FIG. 8 to be described later) due to the effects of a mechanical loss and an iron loss generated in the permanent magnet synchronous motor 4.

In order to explain that the iron loss and the mechanical loss occur when the q-axis current $I_q$ is controlled to 0, the occurrence will be described by using, as an example, a state in which no current physically flows by opening a terminal of a power supply line of the permanent magnet synchronous motor 4 (same as the opening of the AC contactor 6). Even in a state where no current flows in the permanent magnet synchronous motor 4, when the rotor rotates, the magnet magnetic flux changes in the stator core by alternating current, and thus the iron loss occurs. In addition, the mechanical loss due to friction at a bearing portion for supporting the rotor shaft 30 by a frame of the permanent magnet synchronous motor 4 and the ventilation resistance of a fan provided at the rotor shaft 30 occurs in the rotor shaft 30. Since both of these losses occur even in a state where the current is 0, the force is applied in a direction preventing the rotation when considering a state where the rotor is free running. From the above, it can be understood that the mechanical loss and the iron loss are the brake torque generated even when the current is 0.

Although the above is a description of a case where the terminal of the power supply line is opened to physically set the current to 0, and the same applies to a case where the current is controlled to 0 by the inverter. In addition, even in the case where the q-axis current $I_q$ is set to 0 and the d-axis current $I_d$ is allowed to flow so as to weaken the magnetic flux, only the magnitude of the iron loss is changed, and the phenomenon of the generation of the brake torque is not changed.

From the above, it can be understood that the brake torque is generated in the rotor shaft 30 of the permanent magnet synchronous motor 4 only by controlling the current to 0 and the torque during coasting cannot be accurately set to 0.

Based on the above, the torque $\tau_{shaft}$ acting on the rotor shaft 30 is given by Equation (2) when considering brake torque $\tau_{wi}$ due to the iron loss and brake torque $\tau_{wm}$ due to the mechanical loss.

[Equation 2]

$$\tau_{shaft} = \tau_{rotor} - \tau_{wi} - \tau_{wm} \cdot \cdot \cdot (2)$$

However, the brake torque $T_{wi}$ due to the iron loss is calculated by Equation (3) on the basis of an iron loss Wi and the rotational angular frequency $\omega_r$ of the mechanical angle, and the brake torque $T_{Wm}$ due to the mechanical loss is calculated by Equation (4) on the basis of the mechanical loss $W_m$ and the rotational angular frequency $\omega_r$ of the mechanical angle.

[Equation 3]

$$\tau_{wi} = \frac{W_i}{\omega_r} \cdot \cdot \cdot (3)$$

[Equation 4]

$$\tau_{wm} = \frac{W_m}{\omega_r} \cdot \cdot \cdot (4)$$

The mechanical loss $W_m$ is often approximated to about the square of the rotational frequency of the mechanical angle, and the iron loss Wi is often approximated to the rotational frequency of the mechanical angle raised to the power of about 1 to 2. They are expressed by, for example, the following equations (5) and (6).

[Equation 5]

$$W_m = K_m f^2 \cdot \cdot \cdot (5)$$

[Equation 6]

$$W_i = K_h B^{1.6} f + K_e B^2 f^2 \cdot \cdot \cdot (6)$$

Here, $K_m$ is a coefficient of the mechanical loss, $K_h$ is a coefficient of a hysteresis loss, $K_e$ is a coefficient of an eddy current loss, B is a magnetic flux density, and f is a fundamental frequency.

According to Equation (5) and Equation (6), the iron loss $W_i$ and the mechanical loss $W_m$ increase as the fundamental frequency increases, and when coasting in the high-speed region of the railway vehicle, the brake torque increases. That is, in the case where the torque is controlled to 0 by controlling the q-axis current $I_q$ to 0 in Equation (1), the brake torque due to the iron loss $W_i$ or the mechanical loss $W_m$ actually increases as the fundamental frequency increases, as shown in Equation (2) to Equation (6).

Regarding the brake torque due to the loss of the motor during coasting, the mechanical loss similarly occurs in any rotating electric machine such as an induction motor or the permanent magnet synchronous motor 4, but the brake torque due to the iron loss during coasting is a unique problem of the permanent magnet synchronous motor 4 having a magnet in a rotor. This is related to the difference in the operating principle of the motor, and in the case of, for example, an induction motor, the operating principle is that a three-phase AC voltage is applied to the stator winding to form a rotating magnetic pole on the stator side and an induction current is generated in a secondary conductor provided in the rotor to form a secondary magnetic flux. That is, if the voltage output of the inverter is stopped during coasting, the secondary magnetic flux on the rotor side is naturally demagnetized according to the secondary time constant determined by the equivalent circuit constant of the induction motor. Therefore, the iron loss does not occur during coasting in the induction motor having no magnet.

From the above reasons, the brake torque during coasting is larger in the railway vehicle to which the permanent magnet synchronous motor 4 is applied than in the railway vehicle to which the induction motor is applied due to the effect of the iron loss, and it seems that the running resistance of the railway vehicle during coasting is equivalently increased.

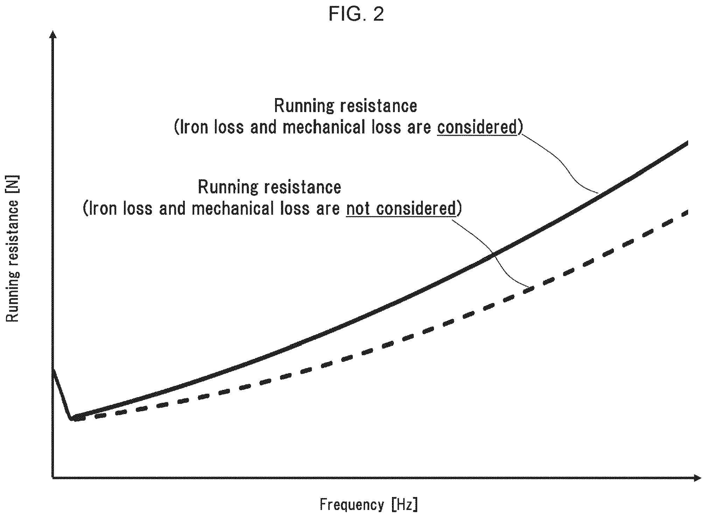

FIG. 2 is a diagram for showing a comparison of the running resistance of the railway vehicle in the presence or absence of the iron loss and the mechanical loss of the permanent magnet synchronous motor. When considering the brake torque due to the iron loss and the mechanical loss, the difference in running resistance becomes larger as the speed increases. That is, on a route where the coasting period is long, there is a possibility that the railway vehicle cannot travel according to the planned operation curve due to the effects of these losses and keep the planned operation time.

That is, in order to prevent the generation of the brake torque due to the iron loss and the mechanical loss during coasting, it is sufficient to set a torque command value $T_m^*$ ($\tau_{rotor}$) on the rotor surface during coasting of the permanent magnet synchronous motor 4 to not 0 but a positive value by inverter control and to increase the value as the frequency increases. Accordingly, the torque $\tau_{shaft}$ generated in the rotor shaft 30 represented by Equation (2) can be made substantially 0.

An example of each torque command value T* of power running, regeneration, and coasting is shown in the torque command computing unit 11 of FIG. 1. The torque command value T* during the coasting control is set to not 0 but a positive value, and is gradually increased according to the frequency. Accordingly, the brake torque due to the iron loss or the mechanical loss can be suppressed. The torque command value T* during the coasting control may be set by using a value calculated by a simulation, or may be set by using the value $\tau_{rotor}$ of the torque adjusted so that the torque $\tau_{shaft}$ generated in the rotor shaft 30 during the coasting control by a torque measuring device becomes 0.

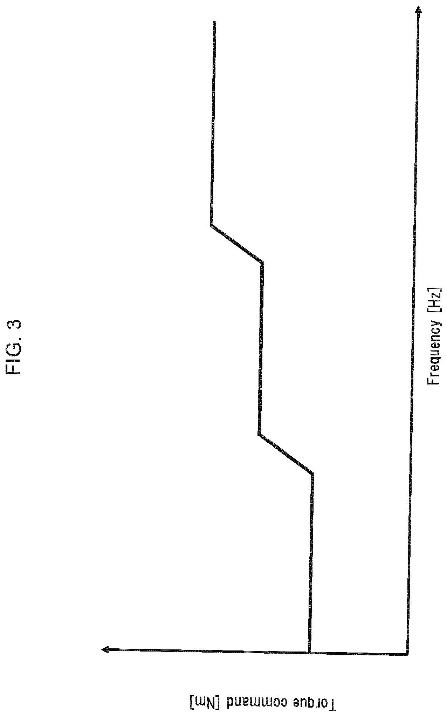

FIG. 3 shows a torque command value set by the torque command computing unit 11 during the coasting control as a modified example of the first embodiment. If the torque command value T* of at least one portion during the coasting control is increased in accordance with an increase in the fundamental frequency, an effect of reducing the brake torque during the coasting control can be obtained. Therefore, the pattern is not limited to the torque command pattern shown in FIG. 1, but may be approximately the torque command pattern shown in FIG. 3.

It should be noted that the technical problem of the generation of the brake torque is related to the configuration of the control system. In the case of a speed control-type control system, even if an error occurs in the torque due to the effect of these losses, the torque is adjusted so that the speed finally matches. Therefore, it is not necessary to pay much attention to the effect of the brake torque due to the loss of the permanent magnet synchronous motor 4. However, in the case of a torque control-type control system such as that for a railway vehicle, since the error of the brake torque during coasting becomes the error of the running resistance, it is necessary to consider the effect of these losses.

In addition, in the case where the motor needs to rotate in both the forward and reverse directions as in the drive system for a railway vehicle, when the definition of the sign of the torque is inverted in the reverse direction (when the torque command value T* set by the control is negative, positive torque is output with respect to the traveling direction), the negative torque command value T* is set during the coasting control, and the torque is output in the direction accelerating with respect to the traveling direction.

In addition, since the iron loss and the mechanical loss are smaller and the brake torque during coasting is also smaller in the low-speed region where coasting control does not need to be applied than those in the high-speed region, the first embodiment may be applied so as to cancel the brake torque due to the loss of the permanent magnet synchronous motor 4 only in the high-speed region where the induced voltage of the permanent magnet synchronous motor 4 exceeds the DC voltage of the inverter unit 1.

It should be noted that the coasting control is performed in the following cases. That is, when the voltage output of the inverter unit 1 is stopped, the coasting control operation is started when the inflow of a regenerative current into a phase current or an overhead contact line current is detected in the case where the rotational frequency becomes high during coasting in a downward gradient, in the case where an overhead contact line voltage drops and a filter capacitor voltage drops, or in the case where the AC contactor 6 is switched from off to on. Alternatively, the coasting control operation is started when the regenerative current is predicted to flow into the phase current or the overhead contact line current on the basis of the rotational frequency, the motor constant, and the detected value of the filter capacitor voltage in the case where the voltage output is stopped from the state where the inverter unit 1 outputs the voltage.

As frequency information to be used for the operation judgment of the coasting control, the inverter frequency used for the control is used as long as the inverter unit 1 is in a control state of outputting the voltage. In the case where the voltage output of the inverter unit 1 is stopped and the control is stopped, any information can be used as long as the information can indicate the speed, such as speed information to be taken into the control unit 2 from the cab of the railway vehicle, speed information by a speed generator, and speed information estimated by an AC voltage sensor mounted between lines of the permanent magnet synchronous motor.

Here, the first embodiment is compared with the prior art. Citation List 1 (Japanese Unexamined Patent Application Publication No. 2010-154661) and Citation List 2 (Japanese Unexamined Patent Application Publication No. Hei 10(1998)-164701) are inventions for controlling a regenerative current flowing to an overhead contact line to 0, and although the generation of brake torque generated by a charging operation can be prevented, the generation of the brake torque due to the iron loss or the mechanical loss cannot be prevented. On the other hand-, since the first embodiment is an invention for intentionally controlling the overhead contact line current to the positive side during the coasting control for the purpose of canceling the brake torque due to the iron loss and the mechanical loss, it can be understood that the invention is different from the prior art.

As a matter of course, in the first embodiment, since the overhead contact line current serving as the input current of the inverter unit 1 flows to the positive side (from the overhead contact line side to the permanent magnet synchronous motor side) at a certain magnitude, there is no problem to be solved by the prior art in which the charging current flows from the permanent magnet synchronous motor side to the inverter side and the brake torque is generated, as described in Citation List 1 and Citation List 2.

In the first embodiment, for the purpose of reducing the brake torque generated due to the iron loss and the mechanical loss during the free running of the permanent magnet synchronous motor 4, the inverter unit 1 includes the voltage generation device 3 for outputting an arbitrary voltage to the permanent magnet synchronous motor 4 and the control unit 2 for adjusting the output voltage of the voltage generation device 3. The control unit 2 has a coasting control function for outputting a voltage so as to suppress the induced voltage of the permanent magnet synchronous motor 4 in the case where it is determined that the induced voltage of the permanent magnet synchronous motor 4 will be higher or has been higher than the maximum voltage that the voltage generation device 3 can output when the voltage output is stopped or when the voltage output is to be stopped. Then, by setting the torque command value T* during the coasting control to a positive value and providing a portion for increasing the positive torque command value T* in accordance with an increase in frequency, the generation of the brake torque during the coasting control can be reduced.

Second Embodiment

A second embodiment is different from the first embodiment in that a portion for reducing the torque command value of the coasting control is provided in a region where weak magnetic flux control is used. Accordingly, even in the case where the magnet magnetic flux is weakened by the weak magnetic flux control during the coasting control in the high-speed region, the torque command value T* required to cancel the brake torque generated due to the loss of the permanent magnet synchronous motor can be calculated more accurately than that in the first embodiment, and the generation of the brake torque during the coasting control can be reduced more accurately.

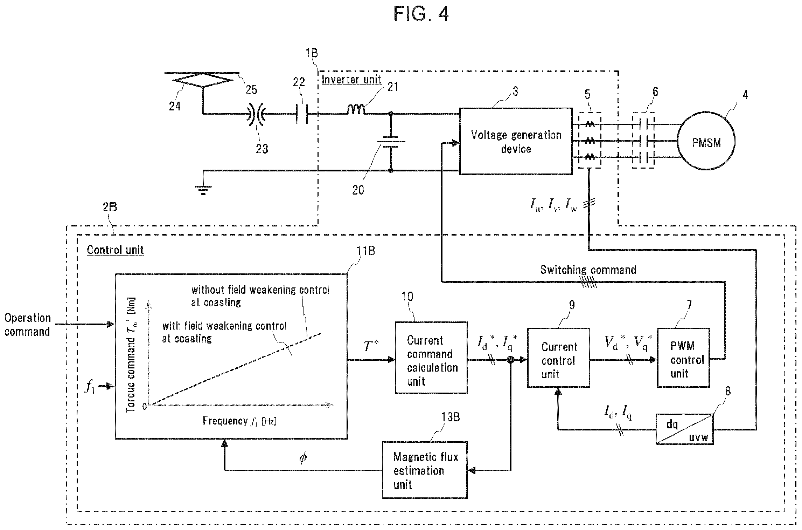

FIG. 4 is a diagram for showing, an example of a functional block of a device for driving a permanent magnet synchronous motor according to the second embodiment. In the second embodiment, an inverter unit 1B further includes a torque command computing unit 11B and a magnetic flux estimation computing unit 13B. The torque command computing unit 11B changes the torque command value T* during the coasting control according to an output $\Phi$ of the magnetic flux estimation computing unit 13B.

The iron loss is calculated in the range of the values of the magnetic flux density raised to the power of about 1.6 to 2 as shown in Equation (6). That is, as described in the first embodiment, the iron loss is changed not only by the frequency but also by the magnetic flux density. Therefore, in the second embodiment, the magnetic flux estimation computing unit 13B computes a magnetic flux $\Phi$ during the coasting control.

The magnetic flux estimation computing unit 13B calculates the magnitude $\Phi$ of a combined magnetic flux by using calculation formulae shown by Equation (7) to Equation (9) on the basis of the dq-axis currents $1_d$ and $I_q$ and the inductance of the dq-axis on the assumption that the magnetic flux set in the control unit 2B is $\Phi_m$. However, the method of calculating the magnetic flux $\Phi$ is not limited to Equation (7) to Equation (9), and any method, such as a method of calculating from a voltage equation of the permanent magnet synchronous motor, may be used as long as the magnetic flux $\Phi$ can be calculated.

[Equation 7]

$$\Phi_d = \Phi_m + L_d I_d \cdot \cdot \cdot (7)$$

[Equation 8]

$$\Phi_q = L_q I_q \cdot \cdot \cdot (8)$$

[Equation 9]

$$\Phi = \sqrt{\Phi_d^2 + \Phi_q^2} \cdot \cdot \cdot (9)$$

The iron loss may be calculated by a method of calculating on the basis of Equation (6) on the basis of $\Phi$ calculated by the magnetic flux estimation computing unit 13B, a method of calculating from a power multiplier n and a coefficient $K_{wi}$ set for calculating the iron loss as shown in Equation (10), or a method of calculating on the basis of table data or the like set in advance on the basis of calculated values. Alternatively, measurement values measured in advance according to a current or a speed may be implemented and used in software as table data or an approximate expression without using the calculated values.

[Equation 10]

$$W_i = K_{wi} \cdot \varPhi^n \cdot \cdot \cdot (10)$$

Based on the iron loss calculated on the basis of Equation (10), the torque $\tau_{wi}$ due to the iron loss after correction considering the effect of the weak magnetic flux control is calculated by dividing by the rotational angular frequency $\omega_r$ of the mechanical angle as similar to Equation (3).

It should be noted that even if the iron loss is reduced by the weak magnetic flux control, the correction at the time of the weak magnetic flux control is not necessary because the mechanical loss depends only on the frequency as described in the first embodiment.

As shown in the torque command computing unit 11B of FIG. 4, in the case where the magnetic flux is weakened by the weak magnetic flux control in the high-speed region, the iron loss becomes small, so that the torque command value T* for canceling the loss becomes smaller as compared to a case where the magnetic flux is not weakened. That is, before and after the application of the weak magnetic flux control, a portion where the change rate of the increase of the torque command value T* becomes small with respect to the increase of the frequency is provided.

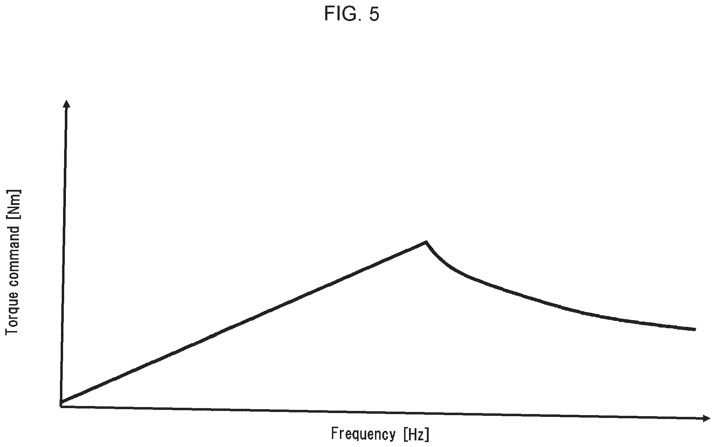

Referring to FIG. 5, a torque command value set by the torque command computing unit 11 during the coasting control as a modified example of the second embodiment of FIG. 4 is shown. FIG. 5 is a diagram for showing an example of a torque command pattern during the coasting control as a modified example of the second embodiment.

As shown in FIG. 5, if the change rate of the increase of the torque command value T* during the coasting control is reduced at least at one portion in the speed region of the weak magnetic flux control with respect to the increase of the frequency, an effect of optimizing the torque command value T* required to cancel the brake torque during the weak magnetic flux control can be obtained. That is, the pattern is not limited to the torque command pattern shown in FIG. 4, but, as shown in FIG. 5, there is a case where the torque command value T* is reduced as compared to that before the weak magnetic flux control depending on the amount of magnetic flux operation by the weak magnetic flux control.

As described above, in the second embodiment, the inverter unit 1B includes the torque command computing unit 11B and the magnetic flux estimation computing unit 13B, and changes the torque command value T* during the coasting control on the basis of the estimated magnetic flux $\Phi$ by the magnetic flux estimation computing unit 13B. Accordingly, even in the case where the weak magnetic flux control is performed during the coasting control, the torque command value T* can be accurately calculated, and the generation of the brake torque can be reduced.

Third Embodiment

A third embodiment is different from the second embodiment in that the magnitude of the magnetic flux used for calculating the iron loss is changed by using temperature information of the magnet. Even in the case where the magnet magnetic flux of the permanent magnet synchronous motor 4 fluctuates due to a temperature change during the operation, the influence of the loss of the motor on the brake torque can be reduced.

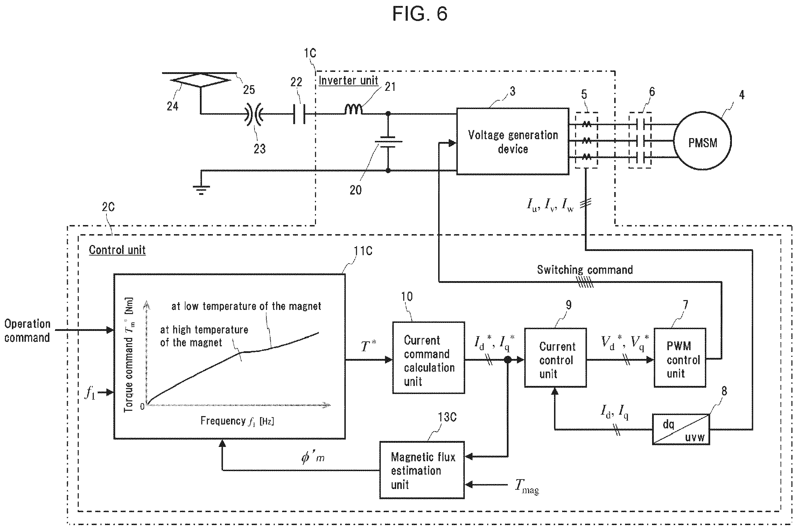

FIG. 6 is a diagram for showing an example of a functional block of a device for driving a permanent magnet synchronous motor according to the third embodiment. In the third embodiment, an inverter unit 1C includes a control unit 2C, and the control unit 2C includes a torque command computing unit 11C and a magnetic flux estimation computing unit 13C. The magnetic flux estimation computing unit 13C corrects the temperature of an output $\Phi_m$ output to the torque command computing unit 11 in accordance with temperature information $T_{mag}$ of the magnet, and changes the torque command value T* output by the torque command computing unit 11C.

The magnet magnetic flux has temperature dependency, and for example, in the case of a neodymium magnet, the magnet magnetic flux changes at a rate of about -0.1%/K in accordance with temperature fluctuations. Therefore, when the magnet temperature increases by 100K, the magnet magnetic flux becomes -10%.

Further, the iron loss is affected by the change of the magnetic flux approximately in the power of 1.6 to 2. as shown in Equation (6). As shown in the torque command computing unit 11C of FIG. 6, the torque command value T* for canceling the iron loss and the mechanical loss greatly changes at the low temperature and the high temperature of the magnet.

Assuming that the temperature coefficient of the magnet is $\alpha$[%/K], the magnetic flux estimation computing unit 13C outputs $\Phi_m'$ obtained by correcting the temperature of $\Phi_m$ using Equation (11) on the assumption that the reference temperature of the magnet magnetic flux $\Phi_m$ set by software is $T_0$[°C] and actual magnet temperature information is $T_{mag}$[°C]. The temperature coefficient $\alpha$ to be used is, for example, -0.1%/K or the like.

[Equation 11]

$$\Phi_m' = \Phi_m \cdot \alpha \cdot \left(T_{mag} - T_0\right) \cdot \cdot \cdot (11)$$

In the embodiment, the magnet magnetic flux $\Phi_m$ calculated by Equation (7) to Equation (9) and the magnet magnetic flux $\Phi_m'$ with the temperature corrected by Equation (11) are output to the torque command computing unit 11. The torque command computing unit 11C calculates the iron loss Wi after the temperature correction on the basis of the magnetic flux $\Phi_m'$ after the temperature correction, and outputs the corrected torque command value T*.

It should be noted that the magnet temperature information $T_{mag}$ uses an estimated value of the magnet temperature calculated by a known technique or a value estimated and computed by using a temperature measurement value of a frame or a stator winding.

As described above, in the third embodiment, by correcting the iron loss Wi with the magnet magnetic flux $\Phi_m'$ with the temperature corrected by using the temperature information in the magnetic flux estimation computing unit 13C, the torque command value T* during the coasting control can be accurately calculated even when the temperature of the magnet fluctuates, and the generation of the brake torque during the coasting control can be reduced.

Fourth Embodiment

A fourth embodiment is different from the first to third embodiments in that a lower limit value is provided to the torque command value T* during the coasting control. In the embodiment, mechanical vibration generated in machine parts such as joints and gears to which the permanent magnet synchronous motor is connected is suppressed during the coasting control, and noise can be reduced during the coasting control.

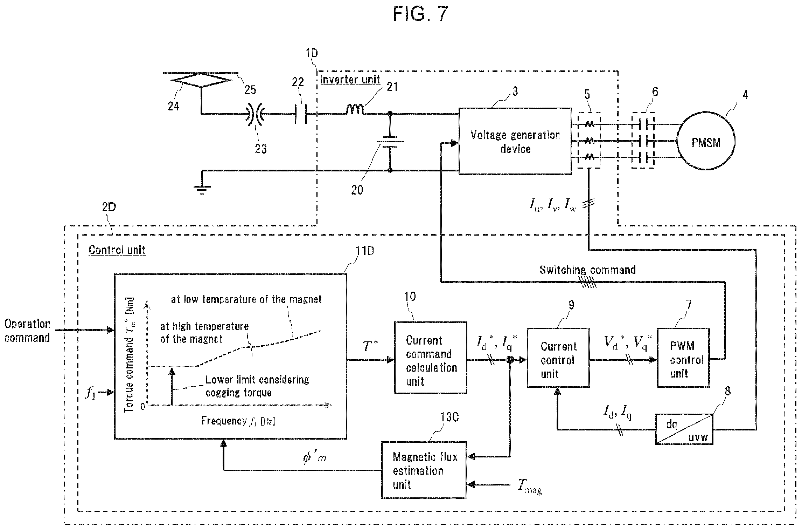

FIG. 7 is a diagram for showing an example of a functional block of a device for driving a permanent magnet synchronous motor according to the fourth embodiment. In the fourth embodiment, an inverter unit 1D includes a control unit 2D. A torque command computing unit 11D in the control unit 2D is different from the torque command computing units 11, 11B, and 11C of the first to third embodiments in that a lower limit function of a positive value is provided for calculation of the torque command value T* during the coasting control. In FIG. 7, the magnetic flux estimation computing unit 13C is not essential.

FIG. 8 shows a schematic configuration diagram of a truck for a railway vehicle. A truck 31 is provided with the permanent magnet synchronous motor 4, and the rotor shaft 30 of the permanent magnet synchronous motor 4 transmits power to a pinion 32 through a joint 34 and rotates an axle 35 by a speed reduction gear configured using the pinion 32 and a gear 33 to rotate a wheel 27 connected to the axle 35.

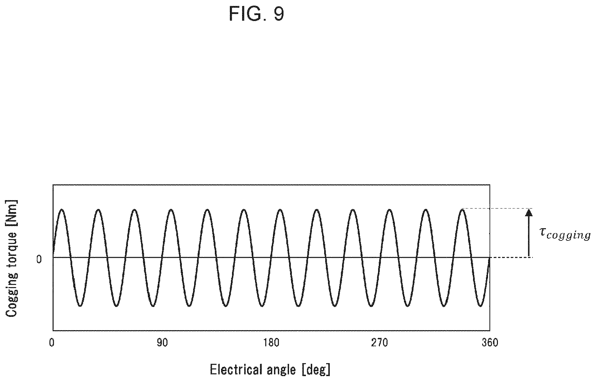

FIG. 9 is a diagram for showing cogging, torque generated in the permanent magnet synchronous motor. In the permanent magnet synchronous motor 4, since the magnetic attraction force between the stator and the rotor changes depending on the rotor position due to the structure of the permanent magnet synchronous motor 4, positive and negative pulsating torque (cogging torque) is generated according to the rotation of the rotor.

In the permanent magnet synchronous motor 4 used for a railway, the main factors determining the pulsation frequency of the cogging torque are a relative permeability (about 1) of a stator slot portion for storing a stator winding and a relative permeability (thousands to tens of thousands) of an iron core portion. Since these have differences, the permeability of a gap between the stator and the rotor has spatial pulsation, thereby generating the cogging torque. While the rotor rotates for one cycle at an electric angle, pulsation according to Equation (12) is generated in accordance with the number $N_{s1}$ of stator slot portions.

[Equation 12]

$$f_{cogging} = \frac{N_{s1}}{P_m} f_r \cdot \cdot \cdot (12)$$

The cogging torque is generated according to the rotor position, and is generated even when the current is 0. That is, even when the q-axis current $I_q$ is controlled to 0 by Equation (1) and the torque is controlled to 0 during the coasting control, the torque pulsation of a high frequency component shown in Equation (12) is generated by the cogging torque.

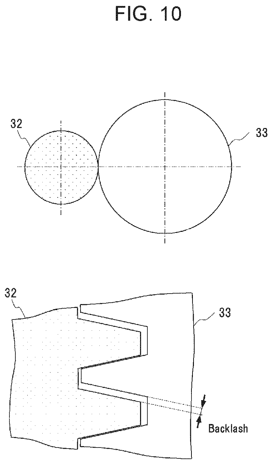

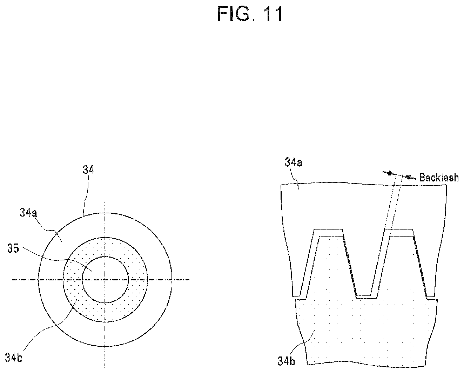

Referring to FIG. 10, an enlarged view of a contact portion of the speed reduction gear configured using the pinion 32 and the gear 33 in a side view A-A of FIG. 8 is shown, and FIG. 11 shows an enlarged view of a contact portion between a joint inner gear 34a and a joint outer gear 34b in a cross-sectional view B-B of FIG. 8. FIG. 10 is a diagram for explaining a meshing portion of the gear of the speed reduction gear. FIG. 11 is a diagram for explaining a meshing portion of the gear of the joint. In FIG. 10 and FIG. 11, the gear is shown in a circular and simplified diagram, and the tooth of the gear is shown only in the enlarged view.

The pinion 32 and the gear 33 configuring the speed reduction gear and the gear used for the joint 34 are provided with a gap called a backlash portion when they are meshed with each other in order to prevent the teeth from interfering with each other and stopping the rotation. In the case where the backlash portion increases due to wear of aging deterioration, vibration and noise are generated, and the service life of peripheral machine parts is accordingly reduced, which leads to deterioration of the riding comfort of passengers in a railway vehicle.

During a normal acceleration/deceleration operation (in a state where torque is output by power running or regeneration), these gears are pressed against each other by the motor torque, and thus vibration, and' noise are not basically generated. However, when positive and negative torque pulsation is generated by the cogging torque in a state where the torque is set to substantially 0 during the coasting control or the like, the gears become a state of repeatedly abutting or separating because of the existence of the backlash portion, and mechanical vibration and noise are generated in the pinion 32 and the gear 33 configuring the speed reduction gear and the joint 34.

On the other hand, as shown in the torque command computing unit 11D of FIG. 7, by setting the torque command value T* during the coasting control to a magnitude equal to or larger than the cogging torque, even if positive and negative torque pulsation is generated during the coasting control, these gears can be held in a state where they are pressed against each other. Thus, vibration and noise generated in the pinion 32 and the gear 33 configuring the speed reduction gear and the joint 34 can be reduced, and the service life of machine parts can be prevented from being reduced.

In addition, even if the torque command value T* during the coasting control is set to a negative value, vibration and noise generated in the backlash portion can be prevented, but as described in the first embodiment, the torque command value T* needs to be set to a positive value because of acting in the direction of increasing the brake torque due to the loss of the permanent magnet synchronous motor 4.

Further, from another point of view, in the case where the present invention is applied to a railway vehicle and the value is set to a negative value, if the own vehicle applies regenerative braking in a state where there is no train operating in power running in the vicinity or in a state where the overhead contact line voltage itself is rising due to the operation of regenerative braking by another train, the filter capacitor voltage rises and an overvoltage is disadvantageously generated. Therefore, by setting the torque command value T* during the coasting control to a positive value and holding the mesh of the gears in a state where the permanent magnet synchronous motor 4 consumes power, an effect of preventing the filter capacitor voltage from rising during the coasting control to generate an overvoltage can also be obtained.

It should be noted that the lower limit value set in the embodiment is not only applicable to the first embodiment, but may be changed depending on a magnetic flux in consideration of the weak magnetic flux control as shown in the second embodiment, or may be changed depending on a magnet temperature as shown in the third embodiment.

As described above, in the fourth embodiment, by providing the lower limit value of a magnitude equal to or larger than the cogging torque to the torque command value T* computed by the torque command computing unit 11D, vibration and noise in the backlash portion generated by the joint and the speed reduction gear during the coasting control can be reduced, and the service life of machine parts can be extended.

Fifth Embodiment

The first to fourth embodiments are preferable when applied to a railway vehicle. Hereinafter, a case where the first to fourth embodiments are applied to a railway vehicle will be described as a fifth embodiment. The fifth embodiment relates to a railway vehicle equipped with a drive system that is powered by a plurality of permanent magnet synchronous motors. In a railway vehicle system to which "selection control" for making the torque output of some permanent magnet synchronous motors 4 substantially 0 and making the output of some permanent magnet synchronous motors 4 relatively large is applied so as to maximize the operation efficiency of a drive system, any one of the first to fourth embodiments is applied to the permanent magnet synchronous motor for making the output substantially 0 during the selection control.

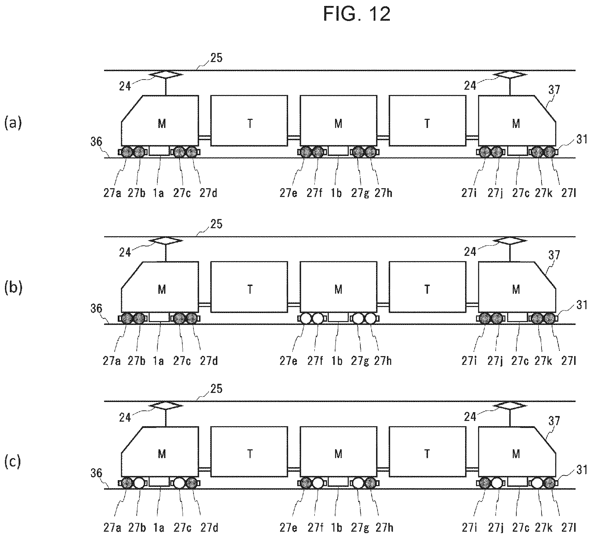

FIGs. 12 are diagrams each showing an example of a railway vehicle according to the fifth embodiment. The trucks 31 and the wheels 27 are shown only in M (Motor) trucks powered by the permanent magnet synchronous motors 4, and the truck parts of T (Trailer) trucks having no motors are not shown. However, the number of trucks (5 trucks) and the combination of M trucks and T trucks shown in FIGs. 12 are merely examples and the present invention is not limited thereto.

In addition, the axles of the wheels 27 are distinguished from each other by subscripts a to 1, and portions of the wheels painted in black mean axles for outputting power by the permanent magnet synchronous motors 4, and portions painted in white mean axles for stopping the outputs of the motors.

FIG. 12(a) shows a state in which the selection control is not applied, and torque is output by all the permanent magnet synchronous motors 4 to obtain power for the formation of the railway vehicle.

In FIG. 12(b), the selection control is applied to make the torque output of the permanent magnet synchronous motor 4 connected to the axles of wheels 27e, 27f, 27g, and 27h operated by the inverter unit 1b substantially 0. However, in the embodiment, the current is not cut off by opening the AC contactor 6 and the like for the permanent magnet synchronous motor 4 connected to the axles that do not output torque during the selection control, and even in the axels that do not output torque, any of the configurations of the first to fourth embodiments is applied to operate as a coasting control state.

In the case where the AC contactor 6 and the like are opened so as not to flow current to the permanent magnet synchronous motor 4 and the power supply line of the permanent magnet synchronous motor 4 is opened and put in a free running state during the selection control, the brake torque is generated due to the influence of the loss of the permanent magnet synchronous motor 4 as described in the first embodiment. In particular, in the case where the power supply line of the permanent magnet synchronous motor 4 is opened, the inverter unit 1 cannot control. Thus, the magnetic flux cannot be weakened by the weak magnetic flux control, the iron loss in the high-speed region becomes larger than that in other embodiments, and the influence of the error of the running resistance becomes large.

In the selection control, a state in which large brake torque is generated in the permanent magnet synchronous motor 4 of a vehicle in which the output of torque is stopped while the permanent magnet synchronous motors 4 of some vehicles output torque is a state in which acceleration between these vehicles acts in opposite directions, so that when the output of torque is started or stopped, an impulse is generated when the vehicles collide with each other, thereby causing a problem that the riding comfort of passengers is deteriorated.

Therefore, in the embodiment, the permanent magnet synchronous motor 4 that does not output torque is always kept in the coasting control state without opening the AC contactor 6 and the like during the power running or regeneration in the selection control, and torque is output by applying any of the configurations of the first to fourth embodiments. Accordingly, the generation of the brake torque due to the iron loss and the mechanical loss generated in the opened vehicle can be prevented, and the impulse generated between the vehicles in starting and stopping can be prevented.

It should be noted that the selection control to which any of the configurations of the first to fourth embodiments is applied during the power running or regeneration may be performed for each vehicle as shown in FIG. 12(b) or for each axle as shown in FIG. 12(c).

As described above, by applying any of the configurations described in the first to fourth embodiments to the vehicle to stop the output in the railway vehicle to which the selection control is applied in the fifth embodiment, it is possible to reduce the generation of the brake torque and the impulse generated between the vehicles.

It should be noted that the present invention is not limited to the above-described embodiments, and includes various modified examples. For example, the above-described embodiments have been described in detail for the purpose of clearly explaining the present invention, and are not necessarily limited to those having all the described configurations. In addition, some configurations of an embodiment can be replaced by a configuration of another embodiment, and a configuration of an embodiment can be added to a configuration of another embodiment. In addition', some configurations of each embodiment can be added to, deleted from, replaced by, integrated into, or dispersed into other configurations. In addition, each of the processes shown in the embodiments may be appropriately dispersed or integrated on the basis of processing efficiency or implementation efficiency.

List of Reference Signs

| | |
|---|---|
| 1, 1B, 1C, 1D, 1a, 1b, 1c | inverter unit |
| 2, 2B, 2C, 2D | control unit |
| 3 | voltage generation device |
| 4 | permanent magnet synchronous motor |
| 5 | current detector |
| 6 | AC contactor |
| 7 | PWM control unit |
| 8 | coordinate converter |
| 9 | current control unit |
| 10 | current command computing unit |
| 11, 11B, 11C, 11D | torque command computing unit |
| 12 | torque command computing unit |
| 13B, 13C | magnetic flux estimation computing unit |
| 20 | filter capacitor |
| 21 | filter reactor |
| 22 | line breaker |
| 23 | high speed circuit breaker |

| 24 | pantograph |
| 25 | overhead contact line |
| 27, 27a to 271 | wheel |
| 30 | rotor shaft |
| 31 | truck |
| 32 | pinion |
| 33 | gear |
| 34 | joint |
| 34a | joint inner gear |
| 34b | joint outer gear |
| 35 | axle |
| 36 | rail |
| 37 | vehicle |

**Claims**

1. A device for driving a permanent magnet synchronous motor comprising:

a voltage generation device that outputs a voltage to a permanent magnet synchronous motor; and
a control unit that controls the output voltage of the voltage generation device on the basis of a torque command value,
wherein in the case where the control unit controls to stop an output of a driving voltage for driving the permanent magnet synchronous motor, when detecting inflow of a current from the permanent magnet synchronous motor to the voltage generation device side, the control unit performs coasting control for controlling the voltage generation device so as to output a voltage for suppressing the induced voltage of the permanent magnet synchronous motor to the permanent magnet synchronous motor, and
wherein during the coasting control, the torque command value is set to a coasting control time torque command value that is a positive value in accordance with a rise in the rotational frequency of the permanent magnet synchronous motor.

2. The device for driving a permanent magnet synchronous motor according to claim 1,
wherein the coasting control includes control of the voltage generation device so as to output the voltage for suppressing the induced voltage of the permanent magnet synchronous motor to the permanent magnet synchronous motor when it is predicted that the inflow of the current from the permanent magnet synchronous motor to the voltage generation device side occurs during the control to stop the output of the driving voltage for driving the permanent magnet synchronous motor.

3. The device for driving a permanent magnet synchronous motor according to claim 1 or 2,
wherein the coasting control time torque command value increases at, at least, one specific rotational frequency.

4. The device for driving a permanent magnet synchronous motor according to claim 1 or 2,

wherein the control unit computes an estimated magnetic flux of the permanent magnet synchronous motor, and
wherein during the coasting control, the coasting control time torque command value is changed on the basis of the estimated magnetic flux.

5. The device for driving a permanent magnet synchronous motor according to claim 4,
wherein the change rate of the coasting control time torque command value in accordance with a rise in the rotational frequency becomes small at, at least, one specific rotational frequency.

6. The device for driving a permanent magnet synchronous motor according to any one of claims 1 to 5,

wherein the control unit computes an estimated magnetic flux of the permanent magnet synchronous motor on the basis of magnet temperature information of the permanent magnet synchronous motor, and
wherein during the coasting control, the coasting control time torque command value is changed on the basis of the estimated magnetic flux computed on the basis of the magnet temperature information.

**EP 3 985 862 A1**

7. The device for driving a permanent magnet synchronous motor according to any one of claims 1 to 6,
wherein the control unit sets a torque value larger than cogging torque generated in the permanent magnet synchronous motor to a lower limit value of the coasting control time torque command value during the coasting control.

8. A method for driving a permanent magnet synchronous motor performed by a device for driving a permanent magnet synchronous motor,
wherein the driving device comprises:

a voltage generation device that outputs a voltage to the permanent magnet synchronous motor; and
a control unit that controls the output voltage of the voltage generation device on the basis of a torque command value,
wherein in the case where the control unit controls to stop an output of a driving voltage for driving the permanent magnet synchronous motor, when detecting inflow of a current from the permanent magnet synchronous motor to the voltage generation device side, the control unit performs coasting control for controlling the voltage generation device so as to output a voltage for suppressing the induced voltage of the permanent magnet synchronous motor to the permanent magnet synchronous motor, and
wherein during the coasting control, the torque command value is set to a coasting control time torque command value that is a positive value in accordance with a rise in the rotational frequency of the permanent magnet synchronous motor.

9. The method for driving a permanent magnet synchronous motor according to claim 8,
wherein the coasting control includes control of the voltage generation device so as to output the voltage for suppressing the induced voltage of the permanent magnet synchronous motor to the permanent magnet synchronous motor when it is predicted that the inflow of the current from the permanent magnet synchronous motor to the voltage generation device side occurs during the control to stop the output of the driving voltage for driving the permanent magnet synchronous motor.

10. The method for driving a permanent magnet synchronous motor according to claim 8 or 9,

wherein the control unit computes an estimated magnetic flux of the permanent magnet synchronous motor, and
wherein during the coasting control, the coasting control time torque command value is changed on the basis of the estimated magnetic flux.

11. The method for driving a permanent magnet synchronous motor according to any one of claims 8 to 10,

wherein the control unit computes an estimated magnetic flux of the permanent magnet synchronous motor on the basis of magnet temperature information of the permanent magnet synchronous motor, and
wherein during the coasting control, the coasting control time torque command value is changed on the basis of the estimated magnetic flux computed on the basis of the magnet temperature information.

12. The method for driving a permanent magnet synchronous motor according to any one of claims 8 to 11,
wherein the control unit sets a torque value larger than cogging torque generated in the permanent magnet synchronous motor to a lower limit value of the coasting control time torque command value during the coasting control.

13. A railway vehicle comprising the device for driving a permanent magnet synchronous motor according to any one of claims 1 to 7.

14. The railway vehicle according to claim 13, comprising a device for driving a plurality of permanent magnet synchronous motors,
wherein during an acceleration/deceleration operation by power running and regeneration, the driving device sets the torque command value to a value during the acceleration/deceleration operation for a specific permanent magnet synchronous motor among the plurality of permanent magnet synchronous motors and sets the coasting control time torque command value to the torque command value for other permanent magnet synchronous motors.

14

FIG. 1

FIG. 2

Running resistance
(Iron loss and mechanical loss are considered)

Running resistance
(Iron loss and mechanical loss are not considered)

Running resistance [N]

Frequency [Hz]

FIG. 3

EP 3 985 862 A1

FIG. 4

EP 3 985 862 A1

FIG. 5

Frequency [Hz]

Torque command [Nm]

FIG. 6

EP 3 985 862 A1

FIG. 7

FIG. 8

FIG. 9

FIG. 10

FIG. 11

FIG. 12

EP 3 985 862 A1

(a)

27a 27b 1a 27c 27d     27e 27f 1b 27g 27h     27i 27j 27c 27k 27l

(b)

27a 27b 1a 27c 27d     27e 27f 1b 27g 27h     27i 27j 27c 27k 27l

(c)

27a 27b 1a 27c 27d     27e 27f 1b 27g 27h     27i 27j 27c 27k 27l

**EP 3 985 862 A1**

## INTERNATIONAL SEARCH REPORT

| | International application No. |
|---|---|
| | PCT/JP2020/021672 |

**A. CLASSIFICATION OF SUBJECT MATTER**
H02P 25/024(2016.01)i; B60L 9/18(2006.01)i; B60L 15/20(2006.01)i; H02P
5/46(2006.01)i
FI: H02P25/024; B60L9/18 A; B60L15/20 J; H02P5/46 H
According to International Patent Classification (IPC) or to both national classification and IPC

**B. FIELDS SEARCHED**

Minimum documentation searched (classification system followed by classification symbols)
H02P25/024; B60L9/18; B60L15/20; H02P5/46

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-253264 A (TOSHIBA CORP.) 15.09.2005 (2005-09-15) paragraphs [0002], [0009], [0016], [0019]- | 1-4, 6, 8-11, 13-14 |
| A | [0020], fig. 1, 3 | 5, 7, 12 |
| Y | JP 2013-85377 A (MITSUBISHI ELECTRIC CORP.) 09.05.2013 (2013-05-09) paragraphs [0155]-[0165], fig. 23 | 1-4, 6, 8-11, 13-14 |
| Y | JP 7-111792 A (MEIDENSHA CORPORATION) 25.04.1995 (1995-04-25) paragraphs [0010]-[0027], fig. 1 | 1-4, 6, 8-11, 13-14 |
| Y | JP 2002-95300 A (MEIDENSHA CORPORATION) 29.03.2002 (2002-03-29) paragraph [0024], fig. 1 | 6, 8-11, 13-14 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 August 2020 (21.08.2020) | 01 September 2020 (01.09.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

27

<table>
<tr><th colspan="2">INTERNATIONAL SEARCH REPORT<br>Information on patent family members</th><th colspan="2">International application No.<br>PCT/JP2020/021672</th></tr>
</table>

| Patent Documents referred in the Report | Publication Date | Patent Family | Publication Date |
|---|---|---|---|
| JP 2005-253264 A | 15 Sep. 2005 | (Family: none) | |
| JP 2013-85377 A | 09 May 2013 | US 2013/0088179 A1 paragraphs [0173]-[0184], fig. 23 DE 102012216777 A1 CN 103051269 A | |
| JP 7-111792 A | 25 Apr. 1995 | (Family: none) | |
| JP 2002-95300 A | 29 Mar. 2002 | (Family: none) | |

Form PCT/ISA/210 (patent family annex) (January 2015)

**EP 3 985 862 A1**